# EUROPEAN PATENT SPECIFICATION

(11) **EP 1 241 798 B1**
(45) Date of publication and mention of the grant of the patent: **01.06.2005**
(21) Application number: 01106699.0
(22) Date of filing: 16.03.2001
(51) Int. Cl.: H04B 1/38, G06K 13/08

(54) **Sliding SIM card holder**
Schiebbarer SIM-Kartenhalter
Support coulissant pour carte SIM

(43) Date of publication of application: 18.09.2002
(73) Proprietor: High Tech Computer Corp., Taoyuan (TW)
(72) Inventor: Jih-Jong, Shiue, Tucheng City, Taipei (TW)
(74) Representative: Schmitz, Hans-Werner, Dipl.-Ing.

(56) References cited:
- WO-A-00/24132
- US-A- 6 101 372

## Description

### BACKGROUND OF THE INVENTION

### Field of the Invention

The invention relates in general to a Subscriber Identity Module (SIM) card holder, and more particularly to a drawable SIM card holder of a mobile phone and starts from US-A-6,101,372.

### Description of the Related Art

Subscriber Identity Module (SIM) Card is for a special purpose about a digital mobile phone of Global System for Mobile Communications (GSM). While the GSM system was developed in Europe, the concept derived from the credit card has been integrated into the design of the digital mobile phone for improving the pirated using of analog mobile phone. It is unique for the subscriber to have a Personal Identification Number (PIN) of the SIM card for using the mobile phone. SIM card is a kind of micro-processing chip containing communication network related information for specially identifying a subscriber, such as the mobile phone number and parameters of communication, and has memory for storing telephone directory or other personal information.

Each subscriber applying an account from the system proprietor can get a SIM card representing a personal identification number. Thus, the subscriber could take out the SIM card and remove it to another mobile phone for the replacement of mobile phones whenever the mobile phone upgrades.

Most SIM card contacting device in the current market secures the SIM card by latching. However, some thorny problems might happen easily, such as falling off the latch, taking out the SIM card with difficulty or failing to contact with the contact element.

US Patent No. 6,101,372 issued to Kubo Hiroshi disclosed a portable telephone set and a card loading mechanism. The telephone set has a case including first and second portions. The first portion can accommodate a battery pack. The second portion is next to the first portion. A card can be loaded to the card loading mechanism, which is then accommodated in the second portion. To change the card, a user needs to remove the card loading mechanism totally out of the second portion; then the card is replaced with a new card; finally, the card loading mechanism with the new card is inserted into the second portion through the first portion. To insert the card loading mechanism into the second portion needs a careful operation to align the card locating mechanism with the second portion, which is inconvenient. Furthermore, to replace with the card in the card loading mechanism with a new card is troublesome since there is no element in the card loading mechanism which can help to eject the card out of the mechanism.

### SUMMARY OF THE INVENTION

It is therefore an object of the invention to provide a drawable Subscriber Identity Module (SIM) card holder for the convenience of removing the SIM card. Meanwhile, using a simple mechanical design, such like an elastomer, enables to hold up the SIM card and the SIM card comes into contact with the contact element securely.

The invention achieves the above-identified objects by providing a drawable SIM card holder of a mobile phone, the main feature of the drawable card holder includes a drawer and an elastomer. The drawer for placing a SIM card is attached to the protective cover of the mobile phone and coupled with the contact element. The elastomer installed in the drawer enables to brace and bounce the SIM card from the drawer and make the plane formed by the SIM card an incline with flexible angle for the convenience of removing the SIM card.

The invention achieves the above-identified objects by providing another drawable SIM card holder, which includes a drawer and an elastomer. The drawer further includes a button capable of clasping the button hole for fixing the drawer on the protective cover.

The invention achieves the above-identified objects by providing another drawable SIM card holder, which includes a drawer and an elastomer. The drawer further includes SIM card positions; the protective cover of the mobile phone has a number of ribs. When the SIM card is inserted into the mobile phone, the SIM card can be put in the right position without left or right deviation due to the withstanding of the SIM card positions disposed two-sidedly and without up or down deviation by a pressure of the ribs and a elasticity from the compression of the elastomer. It enables the SIM card coupled to the contact element of the printed circuit board.

### BRIEF DESCRIPTION OF THE DRAWINGS

Other objects, features, and advantages of the invention will become apparent from the following detailed description of the preferred but non-limiting embodiments. The description is made with reference to the accompanying drawings in which:
FIG. 1 illustrates an interior structural diagram of a drawable SIM card holder according to a preferred embodiment of the invention;
FIG. 2 shows a schematic view of a drawable SIM card holder drawn out from a protective cover according to a preferred embodiment of the invention, wherein the interior of the protective cover is taken as the obverse side; and
FIG. 3 shows a functional flow diagram of operating a mobile phone with a drawable SIM card holder according to a preferred embodiment of the invention.

### DESCRIPTION OF THE PREFERRED EMBODIMENT

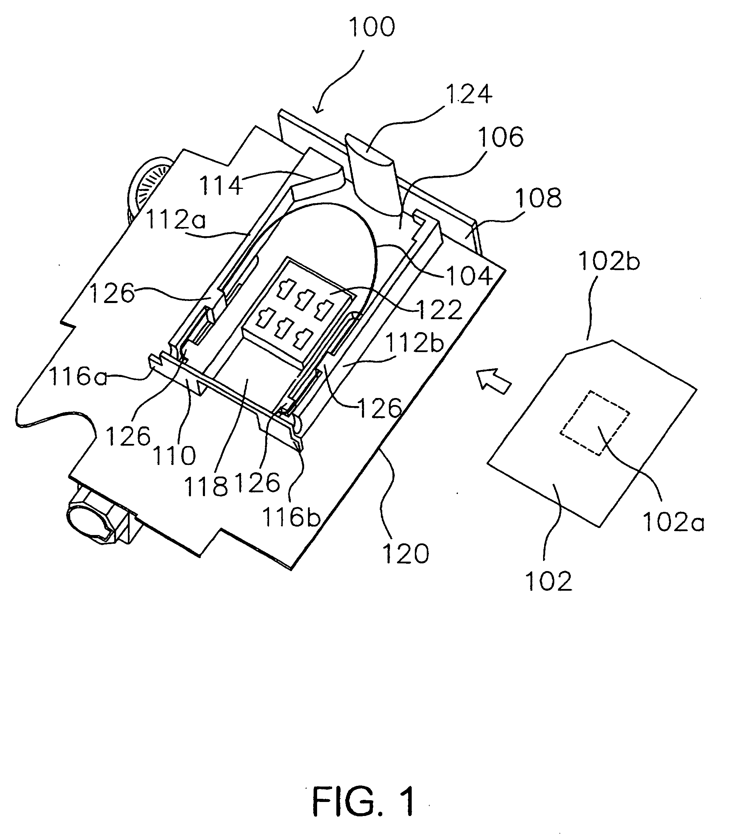

Referring first to FIG. 1, an interior structural diagram of a drawable SIM card holder according to a preferred embodiment of the invention is illustrated. The drawable SIM card holder according to a preferred embodiment of the invention at least includes a drawer 100 for placing a SIM card 102 and an elastomer 104. The elastomer 104 installed in the drawer 100 could be a spring wire, spring or leaf spring. Whenever drawing out the drawer 100, the elastomer 104 can bounce the SIM card 102 from the drawer 100 for the convenience of removing the SIM card 102.

Moreover, the drawer 100 further includes a bottom 106, front edge 108, rear edge 110, first side edge 112a, second side edge 112b, and bevelling 114. Two ends of the front edge 108 connect one end of the first side edge 112a and one end of the second side edge 112b respectively. Two ends of the rear edge 110 connect another end of the first side edge 112a and another end of the second side edge 112b respectively. The bottom connects the front edge 108, rear edge 110, first side edge 112a and second side edge 112b to construct the drawer 100.

The connection between the first side edge 112a and the front edge 108 further includes a bevelling 114 for mating with the SIM card cutting angle 102b. The bevelling 114 design can prevent the SIM card from malposition and indicate proper SIM insertion and mating.

Two ends of the rear edge 110 of the drawer 100 have a first protruding piece 116a and a second protruding piece 116b. The first protruding piece 116a and second protruding piece 116b protect the drawer 100 from entirely drawn away.

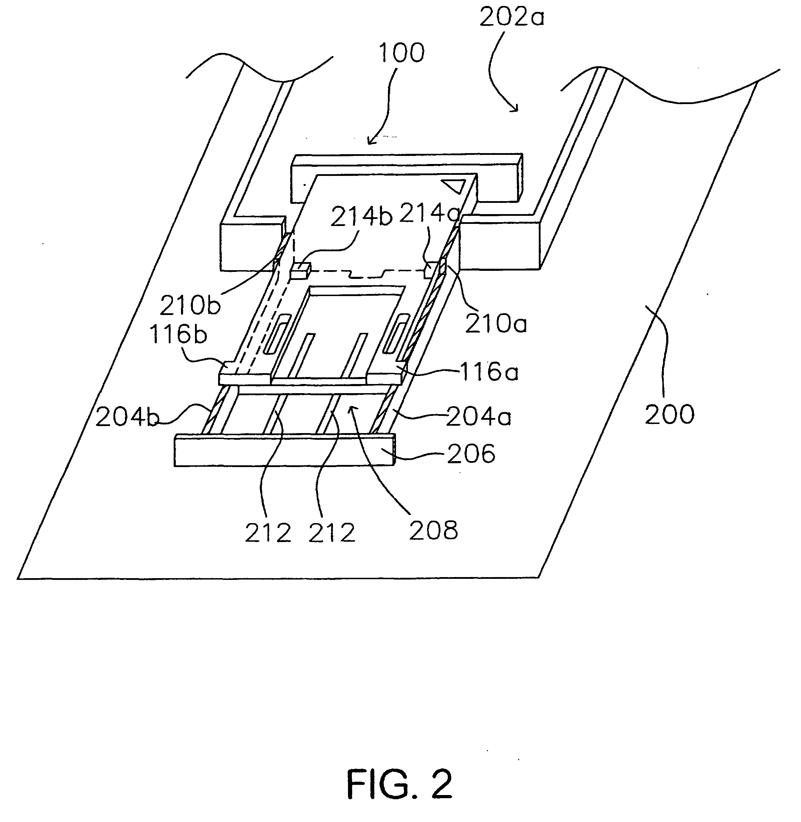

The bottom 106 of the drawer 100 further includes a contact field 118. The SIM card contact point 102a is coupled with the contact element 122 on the printed circuit board 120 of the mobile phone when the drawer 100 is buckled on the protective cover 200 (as shown in FIG. 2).

The drawable SIM card holder according to the preferred embodiment of the invention further includes a button 124 disposed on the front edge 108 of the drawer 100. In addition, there are several blocks 126 on the first edge 112a, second edge 112b and bottom 106 for fixing the elastomer 104 on the drawer 100. The tangent plane formed by the elastomer 104 relative to the surface of the bottom 106 is an incline with flexible angle.

Referring to FIG. 2, a schematic view of a drawable SIM card holder drawn out from a protective cover according to a preferred embodiment of the invention is shown, wherein the interior of the protective cover is taken as the obverse side. As shown in FIG. 2, the interior side of the protective cover 200 includes the first sliding 204a, second sliding 204b and the rear guard 206. The room 208 inside the protective cover 200 is surrounded with the first sliding 204a, second sliding 204b and the rear guard 206. The drawer 100 can be either positioned in the room 208 exactly or drawn out along the first sliding 204a and second sliding 204b.

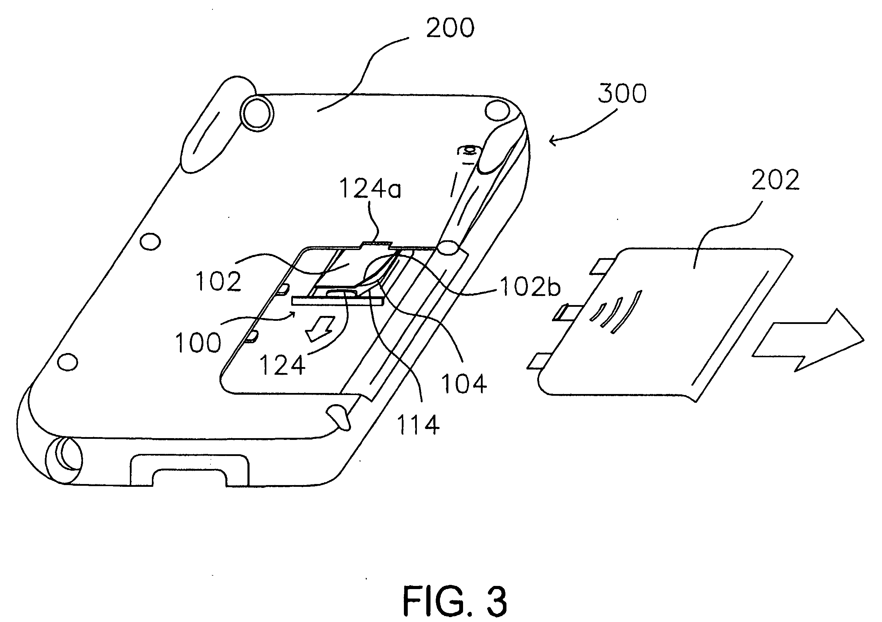

The interior side of the protective cover 200a further includes the first guard 210a and second guard 210b, which are disposed on the first sliding 204a and the second sliding 204b respectively near the room 202a for the battery cover 202 (as shown in FIG. 3). Thus, while the drawer 100 is drawn out, the first protruding piece 116a and the second protruding piece 116b of the drawer 100 can protect the drawer 100 from entirely drawn away by the withstanding of the first guard 210a and a second guard 210b.

Furthermore, the interior side of the protective cover 200 includes the first SIM card position 214a, second SIM card position 214b, which are disposed on the protective cover 200 respectively near two sides of the room 202a for the battery cover 202. Therefore, the SIM card can be put into the drawer 100 in the right position without left or right deviation.

Moreover, the interior side of the protective cover 200 includes a number of ribs, preferably two ribs. When the drawer 100 is buckled on the protective cover 200, the ribs 212 can secure the SIM card 102 from up or down deviation by the pressure of the ribs and the elasticity from the compression of the elastomer and enable the SIM card 102 coupled to the contact element 122 of the printed circuit board 120.

Referring to FIG. 3, a functional flow diagram of operating a mobile phone with a drawable SIM card holder according to a preferred embodiment of the invention is shown. After the battery cover 202 of the mobile phone 300 is taken apart from the protective cover 200 by unclasping the button, the drawer 100 is drawn out from the protective cover 200 and the user can replace the SIM card 102. The drawer 100 has a bevelling 114 for mating with the SIM card cutting angle 102b and thus the SIM card 102 can be inserted promptly in the right direction. In the course of insertion, the elastomer 104 can brace the SIM card 102 and make the plane formed by the SIM card 102 an incline with flexible angle relative to the surface of the bottom 106. When the drawer 100 is buckled on the protective cover 200, the button 124 of the drawer 100 clasps the button hole 124a of the protective cover 200 so that the drawer 100 is fixed on the protective cover 200. Hence, the SIM card 102 is properly and successfully inserted into the mobile phone 300 as the compression of the elastomer 104.

The drawable SIM card holder according to the invention applies to not only the mobile phone but also the two-in-one or three-in-one device consisted of the mobile phone and other electric equipment, such as the device with the combination of the Personal Digital Assistant (PDA) and the mobile phone.

The drawable SIM card holder according to the preferred embodiment of the invention, which provides a drawable drawer applied in the mobile phone system for the convenience of removing the SIM card. Meanwhile, using a simple mechanical design of an elastomer enables to hold up the SIM card and the SIM card comes into contact with the contact element securely.

## Claims

1. A drawable Subscriber Identity Module (SIM) card holder of a mobile phone (300), the mobile phone comprising a protective cover (200) having a battery cover (202) for covering a first room (202a) for the battery cover (202) and a second room (208) next to the first room (202a) for the battery cover (202), **characterized in that**:
the protective cover (200) has an interior side forming a first sliding (204a) , a second sliding (204b) and a rear guard (206) thereon, the second room (208) is surrounded by the first sliding (204a), second sliding (204b) and rear guard (206); and the SIM card holder comprises a drawer (100) having a SIM card (102) therein, wherein the drawer (100) can be positioned relative to the second room (208) in first and second positions, in the first position the drawer (100) being positioned in the second room (208) and in the second position the drawer (100) being drawn out of the second room (208) along the first sliding (204a) and second sliding (204b) but without being entirely drawn away from the second room (208), and an elastomer (104) installed in the drawer (100), capable of bouncing the SIM card (102) from the drawer (100) for the convenience of removing the SIM card (102) from the drawer (100) whenever the drawer (100) is moved to the second position where the drawer (100) is drawn out of the second room (208).

2. The drawable SIM card holder according to claim 1, wherein the drawer (100) further comprises a bottom (106), front edge (108), rear edge (110), first side edge (112a), and second side edge (112b), wherein two ends of the front edge (108) connect one end of the first side edge (112a) and one end of the second side edge (112b) respectively, two ends of the rear edge (110) connect another end of the first side edge (112a) and another end of the second side edge (112b) respectively, and the bottom (106) connects the front edge (108), rear edge (110), first side edge (112a) and second side edge (112b) to construct the drawer (100).

3. The drawable SIM card holder according to claim 2, wherein the SIM card (102) comprises a SIM card cutting angle (102b) and the drawer (100) comprises a bevelling (114) disposed at the connection between the first side edge (112a) and the front edge (108) for mating with the SIM card cutting angle (102b) and preventing the SIM card (102) from malposition.

4. The drawable SIM card holder according to claim 2, wherein the protective cover (200) of the mobile phone (300) further comprises a button hole (124a), and the drawer (100) further comprises:
a button (124) disposed on the front edge (108), wherein the button (124) clasps the button hole (124a) for fixing the drawer (100) on the protective cover (200) or unclasps the button hole (124a) for drawing out the drawer (100) from the protective cover (200).

5. The drawable SIM card holder according to claim 2, wherein the mobile phone (300) further comprises a printed circuit board (120) having a contact element (122), and the drawer (100) further comprises:
a contact field (118) on the bottom (106), the SIM card contact point (102a) is coupled with the contact element (122) when the drawer (100) is buckled on the protective cover (200).

6. The drawable SIM card holder according to claim 1, wherein the interior side of the protective cover (200) further comprises:
a first guard (210a) and a second guard (210b), which are disposed on the first sliding (204a) and the second sliding (204b) respectively near the first room (202a) for the battery cover (202), wherein the first guard (210a) and the second guard (210b) can protect the drawer (100) from entirely drawn away.

7. The drawable SIM card holder according to claim 6, wherein two ends of the rear edge (110) of the drawer (100) respectively comprises:
a first protruding piece (116a) and a second protruding piece (116b), wherein the first protruding piece (116a) and the second protruding piece (116b) can protect the drawer (100) from entirely drawn away by the withstanding of the first guard (210a) and the second guard (210b) while the drawer (100) is drawn out.

8. The drawable SIM card holder according to claim 1, wherein the interior side of the protective cover (200) further comprises:
a first SIM card position (214a) and a second SIM card position (214b), which are respectively disposed near two sides of the first room (202a) for the battery cover (202) for putting the SIM card (102) into the drawer (100) in the right position without left or right deviation.

9. The drawable SIM card holder according to claim 1, wherein the interior side of the protective cover (200) further comprises:
a plurality of ribs (212) in the second room (208), wherein the ribs (212) can secure the SIM card (102) from up or down deviation by a pressure of the ribs (212) and an elasticity from the compression of the elastomer (104) and enable the SIM card (102) coupled to the contact element (122) of the printed circuit board (120) while the drawer (100) is buckled on the protective cover (200).

10. The drawable SIM card holder according to claim 1, wherein the elastomer (104) is a spring wire.

11. The drawable SIM card holder according to claim 1, wherein the elastomer (104) is a spring.

12. The drawable SIM card holder according to claim 1, wherein the elastomer (104) is a leaf spring.

## Patentansprüche

1. Ein schiebbarer SIM-Kartenhalter für ein Mobiltelefon (300), wobei das Mobiltelefon eine Schutzabdeckung (200) umfasst, die eine Batterieabdeckung (202) zum Schließen eines ersten Raums (202a) für die Batterieabdeckung (202) und einen zweiten Raum (208) neben dem ersten Raum (202a) für die Batterieabdeckung (202) aufweist, **dadurch gekennzeichnet, dass**:
die Schutzabdeckung (200) eine Innenseite aufweist, auf der eine erste Gleitführung (204a), eine zweite Gleitführung (204b) und eine rückwärtige Führung (206) gebildet ist, wobei der zweite Raum (208) von der ersten Gleitführung (204a), der zweiten Gleitführung (204b) und der rückwärtigen Führung (206) umgeben ist; und der SIM-Kartenhalter ein Schubfach (100), in dem sich eine SIM-Karte (102) befindet, wobei das Schubfach (100) relativ zu dem zweiten Raum (208) in einer ersten und einer zweiten Position positioniert werden kann, wobei sich das Schubfach (100) in der ersten Position in dem zweiten Raum (208) befindet und wobei das Schubfach (100) in der zweiten Position entlang der ersten Gleitführung (204a) und der zweiten Gleitführung (204b) aus dem zweiten Raum (208) gezogen ist, wobei es nicht vollständig aus dem zweiten Raum (208) gezogen ist, und ein Elastomer (104) umfasst, das in dem Schubfach (100) angeordnet ist und die SIM-Karte (102) senkrecht aus dem Schubfach (100) herausbewegen kann, um die SIM-Karte (102) leicht aus dem Schubfach (100) entnehmen zu können, wenn das Schubfach (100) in die zweite Position bewegt wird, in der das Schubfach (100) aus dem zweiten Raum (208) herausgezogen ist.

2. Der schiebbare SIM-Kartenhalter nach Patentanspruch 1, wobei das Schubfach (100) weiter einen Boden (106), eine Vorderkante (108), eine Hinterkante (110), eine erste Seitenkante (112a) und eine zweite Seitenkante (112b) umfasst, wobei zwei Enden der Vorderkante (108) jeweils ein Ende der ersten Seitenkante (112a) und ein Ende der zweiten Seitenkante (112b) verbinden, zwei Enden der Hinterkante (110) jeweils ein anderes Ende der ersten Seitenkante (112a) und ein anderes Ende der zweiten Seitenkante (112b) verbinden und der Boden (106) die Vorderkante (108), die Hinterkante (110), die erste Seitenkante (112a) und die zweite Seitenkante (112b) verbindet, um das Schubfach (100) aufzubauen.

3. Der schiebbare SIM-Kartenhalter nach Patentanspruch 2, wobei die SIM-Karte (102) eine abgeschnittene Ecke (102b) aufweist und das Schubfach (100) eine Fase (114) aufweist, die an der Verbindung zwischen der ersten Seitenkante (112a) und der Vorderkante (108) angeordnet ist, um mit der abgeschnittenen Ecke (102b) der SIM-Karte zusammengefügt zu werden und zu verhindern, dass die SIM-Karte (102) fehlerhaft eingesetzt wird.

4. Der schiebbare SIM-Kartenhalter nach Patentanspruch 2, wobei die Schutzabdeckung (200) des Mobiltelefons (300) weiter eine Tastenöffnung (124a) aufweist und das Schubfach (100) weiter umfasst:
Eine Taste (124), die an der Vorderkante (108) angeordnet ist, wobei die Taste (124) in die Tastenöffnung (124a) einschnappt, um das Schubfach (100) an der Schutzabdeckung (200) zu fixieren oder aus der Tastenöffnung (124a) ausschnappt, um das Schubfach (100) aus der Schutzabdeckung (200) herauszuziehen.

5. Der schiebbare SIM-Kartenhalter nach Patentanspruch 2, wobei das Mobiltelefon (300) weiter eine gedruckte Leiterplatte (120) umfasst, die ein Kontaktelement (122) aufweist, und das Schubfach (100) weiter umfasst:
Ein Kontaktfeld (118) auf dem Boden (106), wobei der Kontaktpunkt (102a) der SIM-Karte mit dem Kontaktelement (122) gekoppelt ist, wenn das Schubfach (100) an der Schutzabdeckung (200) eingeschnappt ist.

6. Der schiebbare SIM-Kartenhalter nach Patentanspruch 1, wobei die Innenseite der Schutzabdeckung (200) weiter umfasst:
Eine erste Führung (210a) und eine zweite Führung (210b), welche jeweils nahe dem ersten Raum (202a) für die Batterieabdeckung (202) auf der ersten Gleitführung (204a) und der zweiten Gleitführung (204b) angeordnet sind, wobei die erste Führung (210a) und die zweite Führung (210b) verhindern können, dass das Schubfach (100) vollständig herausgezogen wird.

7. Der schiebbare SIM-Kartenhalter nach Patentanspruch 6, wobei zwei Enden der Hinterkante (110) des Schubfachs (100) jeweils umfassen:
Ein erstes vorstehendes Teil (116a) und ein zweites vorstehendes Teil (116b), wobei das erste vorstehende Teil (116a) und das zweite vorstehende Teil (116b) während des Herausziehens des Einschubs (100) durch das Widerstehen der ersten Führung (210a) und der zweiten Führung (210b) verhindern können, dass das Schubfach (100) vollständig herausgezogen wird.

8. Der schiebbare SIM-Kartenhalter nach Patentanspruch 1, wobei die Innenseite der Schutzabdeckung (200) weiter umfasst:
Eine erste SIM-Kartenpositionierung (214a) und eine zweite SIM-Kartenpositionierung (214b), welche jeweils nahe von zwei Seiten des ersten Raums (202a) für die Batterieabdeckung (202) angeordnet sind, damit die SIM-Karte (102) in der richtigen Position ohne eine Abweichung nach links oder rechts in das Schubfach (100) eingesetzt werden kann.

9. Der schiebbare SIM-Kartenhalter nach Patentanspruch 1, wobei die Innenseite der Schutzabdeckung (200) weiter umfasst:
Eine Mehrzahl von Rippen (212) in dem zweiten Raum (208), wobei die Rippen (212) durch einen Druck der Rippen (212) und eine Elastizität von der Kompression des Elastomers (104) verhindern können, dass die SIM-Karte (102) nach oben oder unten deplaziert ist und es ermöglichen, dass die SIM-Karte (102) mit dem Kontaktelement (122) der gedruckten Leiterplatte (120) gekoppelt ist, während das Schubfach (100) an der Schutzabdeckung (200) eingeschnappt ist.

10. Der schiebbare SIM-Kartenhalter nach Patentanspruch 1, wobei das Elastomer (104) ein Federdraht ist.

11. Der schiebbare SIM-Kartenhalter nach Patentanspruch 1, wobei das Elastomer (104) eine Feder ist.

12. Der schiebbare SIM-Kartenhalter nach Patentanspruch 1, wobei das Elastomer (104) eine Blattfeder ist.

## Revendications

1. Support coulissant pour carte SIM (Subscriber Identity Module) d'un téléphone mobile (300), le téléphone mobile (300) comprenant un premier couvercle protecteur (200) ayant un couvercle de batterie (202) pour recouvrir un premier compartiment (202a) destiné au couvercle de batterie (202) et un deuxième compartiment (208) adjacent au premier compartiment (202a) destiné au couvercle de batterie (202), **caractérisé en ce que** :
le couvercle protecteur (200) a un côté intérieur formant une première coulisse (204a), une deuxième coulisse (204b) et une protection arrière (206) sur lui, le deuxième compartiment (208) est entouré par la première coulisse (204a), la deuxième coulisse (204b) et la protection arrière (206) ; et le support de carte SIM comprenant un tiroir (100) ayant une carte SIM (102) en lui, dans lequel le tiroir (100) peut être positionné par rapport au deuxième compartiment (208) dans des première et deuxième positions, le tiroir (100) étant placé dans la première position dans le deuxième compartiment (208) et, dans la deuxième position, le tiroir (100) étant retiré du deuxième compartiment (208) le long de la première coulisse (204a) et de la deuxième coulisse (204b) mais sans être entièrement retiré du deuxième compartiment (208), et un élastomère (104) étant installé dans le tiroir (100), capable d'éjecter la carte SIM (102) depuis le tiroir (100) à chaque fois que le tiroir (100) est déplacé jusqu'à la deuxième position, dans laquelle le tiroir (100) est retiré du deuxième compartiment (208).

2. Support coulissant pour carte SIM selon la revendication 1, dans lequel le tiroir (100) comprend de plus un fond (106), un bord avant (108), un bord arrière (110), un premier bord latéral (112a) et un deuxième bord latéral (112b), dans lequel deux extrémités du bord avant (108) relient une extrémité du premier bord latéral (112a) et une extrémité du deuxième bord latéral (112b) respectivement, deux extrémités du bord arrière (110) relient une autre extrémité du premier bord latéral (112a) et une autre extrémité du deuxième bord latéral (112b) respectivement, et le fond (106) relie le bord avant (108), le bord arrière (110), le premier bord avant (112a) et le deuxième bord arrière (112b) pour construire le tiroir (100).

3. Support coulissant pour carte SIM selon la revendication 2, dans lequel la carte SIM (102) comprend un angle de coupe de carte SIM (102b) et le tiroir (100) comprend un biseau (114) disposé au niveau de la jonction entre le premier bord latéral (112a) et le bord avant (108) pour correspondre à l'angle de coupe de carte SIM (102b) et empêcher un mauvais positionnement de la carte SIM (102).

4. Support coulissant pour carte SIM selon la revendication 2, dans lequel le couvercle protecteur (200) du téléphone mobile (300) comprend de plus un trou de bouton (124a), et le tiroir (100) comprend de plus :
un bouton (124) placé sur le bord avant (108), dans le bouton (124) serre le trou de bouton (124a) pour fixer le tiroir (100) sur le couvercle protecteur (200) ou lâche le trou de bouton (124a) pour extraire le tiroir (100) depuis le couvercle protecteur (200).

5. Support coulissant pour carte SIM selon la revendication 2, dans lequel le téléphone mobile (300) comprend une carte à circuit imprimé (120) ayant un élément de contact (122), et le tiroir (100) comprend de plus :
un champ de contact (118) sur le fond (106), le point de contact de carte SIM (102a) est couplé à l'élément de contact (122) quand le tiroir (100) est enclenché sur le couvercle protecteur (200).

6. Support coulissant pour carte SIM selon la revendication 1, dans lequel le côté intérieur du couvercle protecteur (200) comprend de plus :
une première protection (210a) et une deuxième protection (210b), qui sont placées sur la première coulisse (204a) et la deuxième coulisse (204b) respectivement près du premier compartiment (202a) pour le couvercle de batterie (202), la première protection (210a) et la deuxième protection (210b) pouvant protéger le tiroir (100) d'une extraction complète.

7. Support coulissant pour carte SIM selon la revendication 6, dans lequel deux extrémités du bord arrière (110) du tiroir (100) comprend respectivement :
un premier élément en saillie (116a) et un deuxième élément en saillie (116b), dans lequel le premier élément en saillie (116a) et le deuxième élément en saillie (116b) peuvent protéger le tiroir (100) d'une extraction complète par la résistance de la première protection (210a) et de la deuxième protection (210b) pendant que l'on extrait le tiroir (100).

8. Support coulissant pour carte SIM selon la revendication 1, dans lequel le côté intérieur du couvercle protecteur (200) comprend de plus :
une première position de carte SIM (214a) et une deuxième position de carte SIM (214b) qui sont placées respectivement près de deux côtés du premier compartiment (202a) pour le couvercle de batterie (202) pour insérer la carte SIM (102) dans le tiroir (100) dans la bonne position sans écart vers la gauche ou la droite.

9. Support coulissant pour carte SIM selon la revendication 1, dans lequel le côté intérieur du couvercle protecteur (200) comprend de plus :
une pluralité de nervures (212) dans le deuxième compartiment (208), les nervures (212) pouvant immobiliser la carte SIM (102) contre un écart vers le haut ou le bas par une pression des nervures (212) et une élasticité provenant de la compression de l'élastomère (104) et permettre à la carte SIM (102) couplée à l'élément de contact (122) de la carte à circuit imprimé (120) pendant que le tiroir (100) est encliqueté sur le couvercle protecteur (200).

10. Support coulissant pour carte SIM selon la revendication 1, dans lequel l'élastomère (104) est un fil de ressort.

11. Support coulissant pour carte SIM selon la revendication 1, dans lequel l'élastomère (104) est un ressort.

12. Support coulissant pour carte SIM selon la revendication 1, dans lequel l'élastomère (104) est un ressort à lame.
